**Europäisches Patentamt**

**European Patent Office**

**Office européen des brevets**

(11) Numéro de publication : **0 027 227**
**B1**

(12) **FASCICULE DE BREVET EUROPÉEN**

(45) Date de publication du fascicule du brevet :
15.05.85

(21) Numéro de dépôt : **80106034.4**

(22) Date de dépôt : **06.10.80**

(51) Int. Cl.⁴ : **F 16 K 17/04**

(54) **Soupape de décharge pour installation hydraulique.**

(30) Priorité : **12.10.79 FR 7925477**

(43) Date de publication de la demande :
**22.04.81 Bulletin 81/16**

(45) Mention de la délivrance du brevet :
**15.05.85 Bulletin 85/20**

(84) Etats contractants désignés :
**BE DE FR GB IT NL**

(56) Documents cités :
**DE-B- 1 083 096**
**FR-A- 1 021 221**
**FR-A- 1 505 971**
**FR-A- 2 422 889**
**US-A- 2 243 711**

(73) Titulaire : **ALSTHOM-ATLANTIQUE Société anonyme dite:**
**38, Avenue Kléber**
**F-75784 Paris Cedex 16 (FR)**

(72) Inventeur : **Combes, Gilles**
**72, avenue Léon Blum**
**F-38100 Grenoble (FR)**

(74) Mandataire : **Weinmiller, Jürgen et al**
**Zeppelinstrasse 63**
**D-8000 München 80 (DE)**

**Description**

L'invention est relative à une soupape de décharge hydraulique, telle que celle utilisée pour la protection des installations contre les coups de bélier.

Une telle soupape correspondant au préambule de la revendication1, mais qui comporte un clapet d'obturation appliqué contre un siège par un ressort de compression, a été décrit notamment dans le document de brevet FR-A-1 021 221.

Mais pour pouvoir être adaptée aux conditions locales d'exploitation, la soupape doit comporter un dispositif de tarage du ressort de compression. Or le réglage d'un tel dispositif est particulièrement long et délicat. En effet, d'une part il y a lieu de procéder à des démontages de capots de protection de la soupape pour accéder au dispositif de réglage et, d'autre part, après tarage du ressort, l'élimination de la composante tangentielle de l'effort dû au ressort implique un réglage approprié de l'inclinaison de sa bride antagoniste d'appui disposée à l'extrémité opposée à l'organe d'obturation.

D'autres soupapes connues, voir par exemple le document US-A-2 243 711, comportent une commande hydraulique par exemple par vérin à piston. Le frottement des joints d'un tel piston sur la paroi du cylindre crée des risques de perte d'étanchéité et de blocage mécanique.

L'invention a pour but d'apporter un remède à ces difficultés. L'invention telle qu'elle est caractérisée dans la revendication 1 propose une soupape qui est d'un réglage particulièrement simple sans nécessiter de démontage, et dont le fonctionnement soit exempt de frottement et de risque d'instabilité du clapet, la force tangentielle agissant sur le clapet étant pratiquement nulle.

La combinaison du disque d'un certain diamètre et du soufflet comme organe de poussée permet au disque d'obturation d'être parfaitement stabilisé sur son jet de manière hydrodynamique par le fluide sortant, ce qui permet de se passer d'organes mécaniques de guidage toujours susceptibles de frottements ou de grippage.

Dans une réalisation particulière de la soupape selon l'invention, le soufflet est relié à une poche d'expansion déformable placée dans un réservoir soumis, par l'intermédiaire d'un diaphragme réglable, à la pression régnant dans l'installation hydraulique.

Dans une autre réalisation, le soufflet est relié à un autre soufflet soumis au poids d'une charge de tarage.

L'invention sera décrite ci-après en détail à l'aide de divers modes de réalisation donnés à titre d'illustration dans les dessins annexés.

La figure 1 est une vue en coupe axiale d'une soupape selon l'invention.

La figure 2 est une vue schématique en coupe de cette soupape dans une application particulière.

La figure 3 est une vue schématique en coupe de cette soupape dasn une autre application.

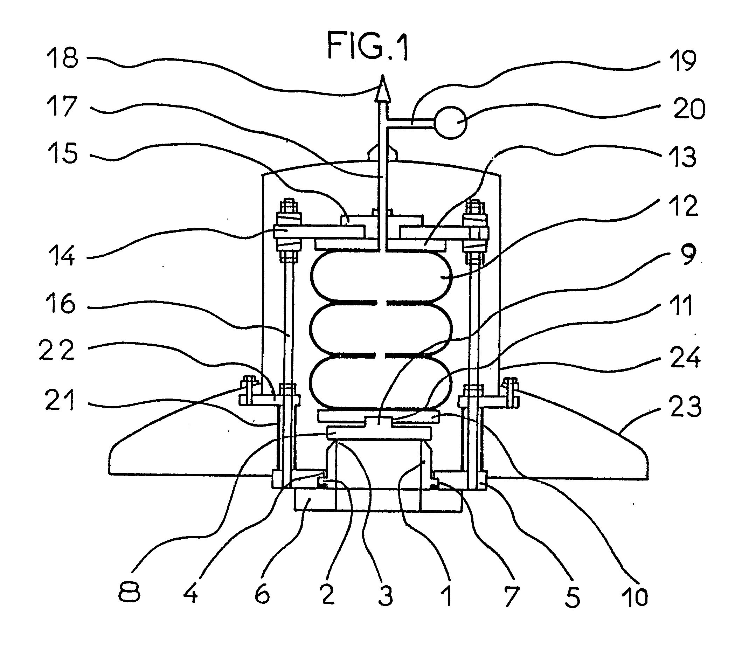

La soupape de la figure 1 comporte une buse 1 présentant à son extrémité inférieure un épaulement 2 et à son extrémité supérieure un siège 3. La base 1 est fixée au travers de l'ouverture circulaire 4 d'une plaque de base 5 à l'aide d'une bride 6 par l'intermédiaire de boulons non représentés. A cet effet, l'épaulement 2 est disposé dans une gorge circulaire 7 ménagée sous la face inférieure de la plaque 5.

Le siège 3 coopère avec la face inférieure d'un clapet 8 sous forme d'un disque constituant l'organe d'obturation de la soupape. Le disque 8 est surmonté d'un bossage central 9 disposé dans un alésage 11 du flasque inférieur 10 d'un soufflet 12 comportant un flasque supérieur 13 fixé au travers d'une bride supérieure 14 à l'aide d'une demi-bride par l'intermédiaire de boulons non représentés.

La bride supérieure 14 est elle-même fixée de manière réglable à la plaque de base 5 par des tirants périphériques 16 vissés sur la plaque inférieure 5 et sur la bride supérieure 14. L'enceinte souple comporte à sa partie supérieure un conduit axial 17 qui traverse le flasque 13 et la contre-bride 15 et qui présente à son extrémité supérieure une valve 18 ainsi qu'une prise d'alimentation 19 pour un manomètre 20.

Des colonnettes 21 reposant sur la plaque de base 5 et traversées par les tirants 16 supportent une couronne 22 sur laquelle sont fixés une jupe inférieure 23 et un capot 24.

La buse 1 étant reliée à l'aide de la bride 6 à une conduite d'installation hydraulique non représentée, le fonctionnement est le suivant.

Après avoir relié la valve 18 à une source pneumatique non représentée, on gonfle le soufflet 12 à une pression dont la valeur, contrôlée par le manomètre 20, est choisie en fonction de celle de la pression hydraulique de l'installation exercée au droit du siège 3 sous l'organe d'obturation 8, et on règle de manière convenable l'inclinaison de la bride 14 grâce aux boutons de fixation sur les tirants 16.

Lorsqu'une surpression accidentelle dépassant la valeur de réglage du soufflet est induite dans l'installation hydraulique, le clapet 8 est soulevé et laisse échapper autour du siège 3 une lame liquide qui le maintient centré et est canalisée par la jupe 23.-

Pour modifier le réglage de la soupape, il est suffisant de modifier la pression du soufflet en la contrôlant à l'aide du manomètre 20 et en utilisant la valve 18 avec ou sans le concours d'une source de gonflage, selon le cas.

Lorsque ces organes sont placés au-dessus du capot 24, il n'est pas nécessaire de le démonter car il n'y a généralement pas lieu de modifier le réglage des boulons de fixation de la bride 14 sur les tirants 16.

La soupape une fois réglée présente un seuil de fonctionnement dont la valeur est indépendante des conditions d'exploitation de l'installation hydraulique qu'elle est appelée à protéger.

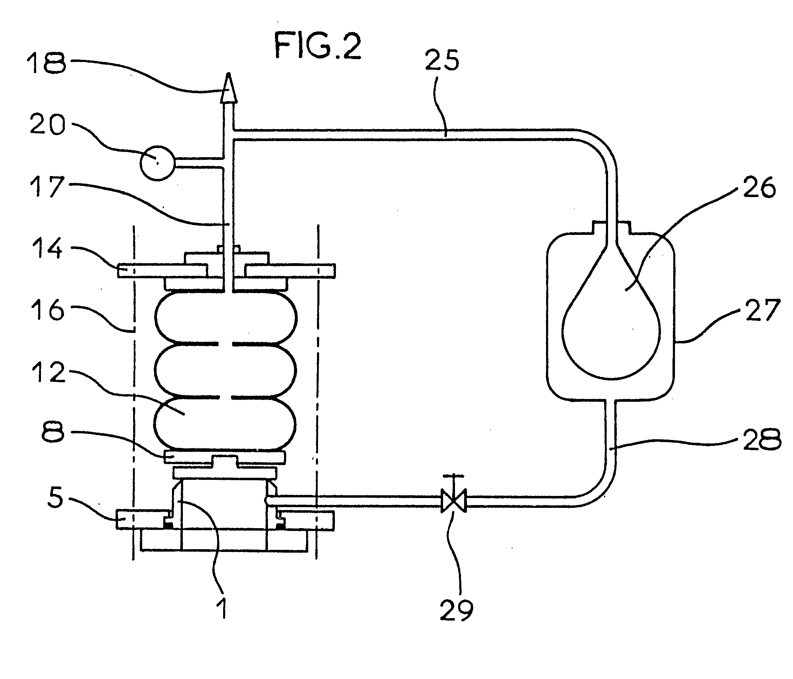

La figure 2 présente une application de cette soupape avec un seuil de fonctionnement qui suit automatiquement les variations des conditions d'exploitation de l'installation, dans la mesure où ces variations ne sont pas brusques.

A cet effet, un piquage 25 relie le conduit 17 à une poche déformable 26 qui est placée dans l'enceinte d'un réservoir étanche 27 reliée par l'intermédiaire d'un conduit 28 à la pression régnant à l'intérieur de la buse 1 en communication avec l'installation hydraulique à protéger. D'autre part, un diaphragme réglable 29 est disposé au travers du conduit 28.

Grâce au diaphragme 29 le seuil de fonctionnement suit les variations lentes de la pression d'exploitation de l'installation hydraulique mais non les variations brutales comme celles provenant des coups de bélier. Il en résulte que le clapet 8 ne s'ouvre que dans le cas de surpression brusque.

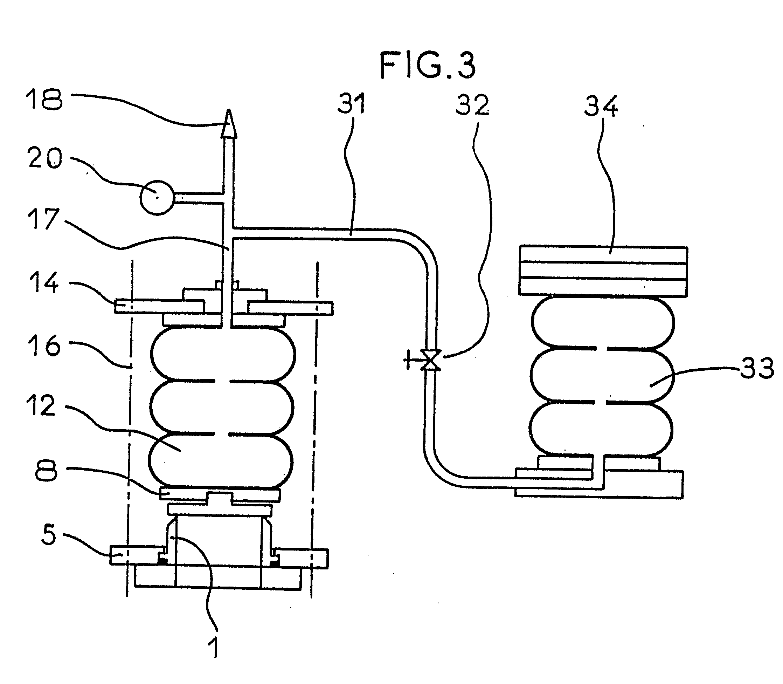

Dans le mode d'application de la figure 3, on a cherché à éviter au soufflet 12 les variations de la pression dues aux modifications de la température ambiante et éventuellement à permettre également un ajustement volontaire du réglage du seuil de fonctionnement de la soupape.

A cet effet, un piquage 31 relie le conduit 17 au travers d'un diaphragme 32 à une autre enceinte souple 33, qui est soumise au poids donné par une charge de tarage 34.

On impose ainsi à la pression régnant dans le soufflet 12 de rester égale à long terme à la pression constante appliquée par la charge 34, la présence du diaphragme 32 permettant cependant de commander la soupape par variation rapide de la pression en 18.

## Revendications

1. Soupape de décharge hydraulique, comportant

— un clapet d'obturation (8) sous forme d'un disque coopérant avec un siège circulaire (3), une face de ce clapet étant sur ce siège en position de fermeture et subissant en une direction longitudinale une force résultant de la pression de l'installation hydraulique,

— et un organe de poussée (12) pour maintenir ce clapet (8) en position de fermeture tant que la pression de l'installation hydraulique est inférieure à un seuil tout en lui permettant de se déplacer selon ladite direction longitudinale sans organe mécanique de guidage pour passer en position d'ouverture quand cette pression dépasse ce seuil, caractérisée par le fait que l'organe de poussée est constitué par un soufflet à coussin pneumatique (12) de forme sensiblement cylindrique dont la longueur s'étend selon ladite direction longitudinale et tend à augmenter en présence d'une surpression interne, et que le clapet (8) présente un diamètre sensiblement égal à 1,25 fois celui de l'ouverture du siège (3).

2. Soupape selon la revendication 1, caractérisée en ce que le soufflet (12) est relié à une poche d'expansion (26) déformable placée dans un réservoir (27) soumis, par l'intermédiaire d'un diaphragme réglable (29), à la pression régnant dans l'installation hydraulique.

3. Soupape selon la revendication 1, caractérisée en ce que le soufflet (12) est relié à un autre soufflet (33) soumis au poids d'une charge de tarage (34).

## Claims

1. A hydraulic relief valve, comprising

— a disk-shaped obturation flap (8) which cooperates with a circular seat (3), one side of this flap being applied to this seat in the closed position and being subjected, in a longitudinal direction, to a force resulting from the pressure of the hydraulic installation,

— and a thrust member (12) for maintaining this flap (8) in the closed position as long as the pressure of the hydraulic installation is below a threshold level, while allowing it to move along said longitudinal direction without a mechanical guide member, for passing into the open position when this pressure passes beyond this threshold level, characterized in that the thrust member is constituted by bellows with a pneumatic cushion (12) of essentially cylindrical form, the length of these bellows extending along said longitudinal direction and tending to increase in the presence of an inner over-pressure, and that the flap (8) presents a diameter which is substantially equal to 1,25 times that of the opening of the seat (3).

2. A valve according to claim 1, characterized in that the bellows (12) are connected to a deformable expansion pocket (26) disposed in a tank (27) which is submitted, via an adjustable diaphragm (29), to the pressure of the hydraulic installation.

3. A valve according to claim 1, characterized in that the bellows (12) are connected to other bellows (33) submitted to the weight of a calibration charge (34).

## Patentansprüche

1. Hydraulisches Überdruckventil, mit

— einer Verschlußklappe (8) in Form einer Scheibe, die mit einem kreisförmigen Sitz (3) zusammenwirkt, wobei eine Seite dieser Klappe sich in Schließstellung auf diesem Sitz befindet und in einer Längsrichtung einer Kraft ausgesetzt ist, die aus dem Druck der hydraulischen Anlage resultiert,

— und einem Druckorgan (12), um diese Klappe (8) in Schließstellung zu halten, solange der Druck der hydraulischen Anlage unter einer Schwelle liegt, und ihr gleichzeitig zu ermöglichen, sich in der genannten Längsrichtung ohne mechanisches Führungsorgan zu bewegen, um in die Öffnungsstellung überzugehen, wenn dieser Druck diese Schwelle übersteigt, dadurch gekennzeichnet, daß das Druckorgan aus einem pneumatischen Kissenbalg (12) von im wesentlichen zylindrischer Form besteht, dessen Länge sich gemäß der genannten Längsrichtung erstreckt und sich bei Vorhandensein eines inneren Überdrucks vergrößert, und daß die Klappe (8) einen Durchmesser aufweist, der im wesentlichen 1,25 mal so groß wie die Öffnung des Sitzes (3) ist.

2. Ventil nach Anspruch 1, dadurch gekennzeichnet, daß der Balg (12) mit einer verformbaren Ausdehnungstasche (26) verbunden ist, welche sich in einem Behälter (27) befindet, der über eine regulierbare Blende (29) dem in der hydraulischen Anlage herrschenden Druck unterworfen ist.

3. Ventil nach Anspruch 1, dadurch gekennzeichnet, daß der Balg (12) mit einem anderen Balg (33) verbunden ist, der dem Gewicht einer Eichlast (34) unterworfen ist.

FIG.1

FIG.2

0 027 227

# FIG.3

18

20

17

14

16

12

8

5

1

31

32

34

33

0 027 227

3